**Europäisches Patentamt**

**European Patent Office**

**Office européen des brevets**

(11) Veröffentlichungsnummer: **0 291 894 B1**

(19)

(12) # EUROPÄISCHE PATENTSCHRIFT

(45) Veröffentlichungstag der Patentschrift: **06.11.91**

(51) Int. Cl.5: **B60N 2/00**

(21) Anmeldenummer: **88107781.2**

(22) Anmeldetag: **14.05.88**

(54) Reisefahrzeug.

(30) Priorität: **18.05.87 DE 3716626**

(43) Veröffentlichungstag der Anmeldung:
**23.11.88 Patentblatt 88/47**

(45) Bekanntmachung des Hinweises auf die
Patenterteilung:
**06.11.91 Patentblatt 91/45**

(84) Benannte Vertragsstaaten:
**AT BE CH ES FR GB IT LI NL SE**

(56) Entgegenhaltungen:
**EP-A- 0 248 373**
**DE-B- 1 217 805**
**FR-A- 2 399 927**
**GB-A- 2 011 252**
**US-A- 4 141 093**

(73) Patentinhaber: **Welter, Manfred**
**Max-Planck-Strasse 10**
**W-4172 Straelen(DE)**

Patentinhaber: **Hüssmann, Johannes**
**Markt 19**
**W-4172 Straelen(DE)**

(72) Erfinder: **Welter, Manfred**
**Max-Planck-Strasse 10**
**W-4172 Straelen(DE)**
Erfinder: **Hüssmann, Johannes**
**Markt 19**
**W-4172 Straelen(DE)**

(74) Vertreter: **Funken, Josef, Dipl.-Ing.**
**Hochstrasse 3e**
**W-4133 Neukirchen-Vluyn(DE)**

## Beschreibung

Die Erfindung betrifft ein Reisefahrzeug, insbesondere einen Reiseomnibus, mit einem Mittelgang durch den Fahrgastraum und mit zu beiden Seiten des Mittelganges vorgesehenen Doppelsitzen mit Sitzbank und Rückenlehne, die aus einer Sitzposition in eine Ruhe- bzw. Liegeposition und umgekehrt zu bringen sind.

Bei einem bekannten Reiseomnibus sind die alle in Fahrtrichtung des Reiseomnibusses orientierten Sitze aus einer Sitzposition in eine Ruhe- bzw. Liegeposition zu bringen, indem die Rückenlehnen aus der normal geneigten Stellung in eine stark geneigte Lage zu bringen sind. Hierbei liegt der Fahrgast weiter nach hinten und kann in dieser Sitzhaltung ruhen bzw. schlafen. Der Fahrgast kann dabei allerdings nur auf dem Rücken liegen. Es ist nicht möglich, sich auf die Seite zu legen, um eine andere Körperhaltung einzunehmen.

Aus der DE-B-12 17 805 ist ein Reiseomnibus bekannt, bei dem zu beiden Seiten des Mittelganges in Fahrtrichtung orientierte Doppelsitze vorgesehen sind. Der Abstand der Doppelsitze voneinander in Längsrichtung des Omnibusses entspricht der Länge der Sitzpolster. Dabei besteht ein Sitzpolster eines Sitzes aus zwei an der Hinterkante des Sitzpolsters aneinander angelenkten, in Sitzstellung zusammengeklappten unteren und oberen Polsterhälften. Diese sind zur Bildung von Liegeflächen auseinanderzuklappen und mit den entsprechenden Polsterhälften des zugehörigen Nachbarsitzes zu verbinden. Desgleichen besteht das Rückenlehnenpolster jedes Sitzes aus zwei an der Oberkante des Rückenlehnenpolsters aneinander angelenkten, in Sitzstellung zusammengeklappten vorderen und hinteren Polsterhälften. Diese sind zur Bildung von Liegeflächen nach oben hin auseinanderklappbar. In dieser horizontalen Lage sind diese Polsterhälften durch Ketten, Bänder oder dgl. in ihrer Lage zu halten.

Die Sitz- und Rückenlehnenpolster bilden zwar in der horizontalen Lage ebene Liegeflächen, sind in der Sitzposition jedoch auch eben, weisen also keinerlei Ausformungen des Sitzpolsters bzw. des Polsters der Rückenlehne auf, so daß diese Sitze in der Sitzposition entsprechend unbequem sind.

Der Erfindung liegt die Aufgabe zugrunde, ein Reisefahrzeug der einleitend genannten Art zu schaffen, bei dem der Umbau der Sitze schnell und ohne besonderen Kraftaufwand durchzuführen ist, wobei die Sitze sowohl in der Sitzposition als auch in der Liegestellung besonders bequem sind.

Diese Aufgabe wird erfindungsgemäß dadurch gelöst, daß der Fahrgastraum zu beiden Seiten des Mittelganges durch Querwände in mehrere Abteile mit je zwei einander gegenüber angeordneten Doppelsitzen unterteilt ist, daß je Doppelsitz ein Lehnenrahmen für die Rückenlehnen und ein Sitzrahmen für die Sitzbank vorgesehen sind, wobei der Lehnenrahmen über Laschen mit der zugehörigen Querwand und der Sitzrahmen über Hebel mit den Laschen gelenkig verbunden ist, und daß an der Querwand hinter dem Lehnenrahmen ein Bettrahmen für ein Oberbett in Fahrzeuglängsrichtung schwenkbeweglich angeordnet ist.

Hierdurch gelangt man zu einem Reisefahrzeug, in dem der Fahrgast normal sitzen und wie in einem Bett liegen kann. In der Sitzposition der Sitze sitzt der Fahrgast auf dem Sitzpolster und lehnt den Rücken gegen die Rückenlehne, wobei das Sitzpolster und die Rückenlehne in üblicher Weise den Körperkonturen des Fahrgastes entsprechend gemuldet sind, so daß insbesondere der Rücken überall eine Unterstützung findet und nicht ermüdet.

Hinzu kommt, daß der Umbau der einzelnen Sitze aus der Sitzposition in die Liegeposition schnell und ohne besonderen Kraftaufwand möglich ist. Hierzu genügt es, lediglich die beiden Rückenlehnen der einander gegenüber angeordneten Doppelsitze nach vorn in die horizontale Lage zu schwenken und hier zu arretieren, so daß dadurch bereits das untere Bett im wesentlichen fertiggestellt ist. Anschließend sind die beiden Rahmen für das Oberbett nach oben in die horizontale Lage zu schwenken und hier zu unterstützen und zu arretieren.

In weiterer Ausgestaltung der Erfindung kann die Anordnung so getroffen sein, daß der Lehnenrahmen an seinem unteren Ende zu beiden Seiten mit je einer Lasche und der Sitzrahmen an seinem rückwärtigen Ende zu beiden Seiten mit je einem Hebel fest verbunden sind, wobei die Laschen an ihren rückwärtigen Enden in Gelenken an der Querwand gelagert und an ihren vorderen Enden mit den Hebeln gelenkig verbunden sind.

Gemäß einem weiteren vorteilhaften Merkmal kann vorgesehen sein, daß an den Seitenwänden der Doppelsitze schräg nach rückwärts verlaufende Führungsprofile angebracht sind und daß im vorderen Bereich des Sitzrahmens zu beiden Seiten außen je eine Führungsrolle vorgesehen ist, die in den Führungsprofilen geführt ist.

Hierdurch gelangt man zu einem Sitz, bei dem die gewünschte Zuordnung von Rückenlehne und Sitzbank zueinander sowohl in der Sitzposition des Sitzes als auch in seiner Liegeposition zwangsläufig gegeben sind.

Vorteilhafterweise ist je Seitenwand der Doppelsitze (55,56) ein Seitenrahmen (28) vorgesehen, in dessen unterem Bereich ein nach innen abstehendes Auflager (67) für die Lagerung des Lehnenrahmens (30) in der Liegeposition angebracht ist. - Damit ist gewährleistet, daß der Lehnenrahmen stabil abgestützt und in der Liegeposition sicher gehalten ist.

Zweckmäßigerweise ist auf der Rückseite des Lehnenrahmens eine Liegeauflage vorgesehen. - In der Liegeposition des Lehnenrahmens befindet sich oberhalb des Lehnenrahmens die Liegeauflage und unterhalb des Lehnenrahmens das Rückenpolster, so daß in der Liegeposition lediglich die Liegeauflage und in der Sitzposition ausschließlich das Rückenpolster benutzt werden. Das führt zu dem Vorteil, daß das Rückenpolster den Anforderungen beim Sitzen und die Liegeauflage den Anforderungen beim Liegen optimal angepaßt werden können.

An den Querwänden können Haltevorrichtungen für die Rückenlehnen in der Sitzposition vorgesehen sein.

Zweckmäßig ist der Bettrahmen mit seinem oberen Ende an der Querwand in Fahrzeuglängsrichtung schwenkbeweglich angeordnet. Dabei kann auf der Oberseite des Bettrahmens eine Liegeauflage vorgesehen sein.

Zweckmäßig kann die Anordnung so getroffen sein, daß zur Herstellung der Betten zunächst die Lehnenrahmen beider einander gegenüber angeordneter Doppelsitze nach unten und anschließend die einander gegenüberliegenden Bettrahmen nach oben in die horizontale Lage zu schwenken und jeweils in dieser Lage zu arretieren sind.

Dabei können die Bettrahmen durch hochgeschwenkte Armlehnen unterstützt und von am Dach des Fahrzeuges befestigten Gurten gehalten sein.

Außerdem empfiehlt es sich, daß beim Schwenken des Lehnenrahmens nach vorn die am Sitzrahmen vorgesehenen Führungsrollen in dem schrägen Führungsprofil geführt sind.

Die Erfindung wird nachfolgend anhand eines in der Zeichnung dargestellten Ausführungsbeispieles des näheren erläutert. Es zeigt

Fig. 1     eine Seitenansicht auf einen Reiseomnibus mit den erfindungsgemäßen Merkmalen,

Fig. 2     eine Ansicht auf ein Abteil vom Mittelgang her mit den Sitzen in der Sitzposition,

Fig. 3     eine Ansicht auf ein Abteil vom Mittelgang her mit den Sitzen in der Liegeposition,

Fig. 4     eine Darstellung des Gestänges eines Sitzes in der Sitzposition und in der Liegeposition und

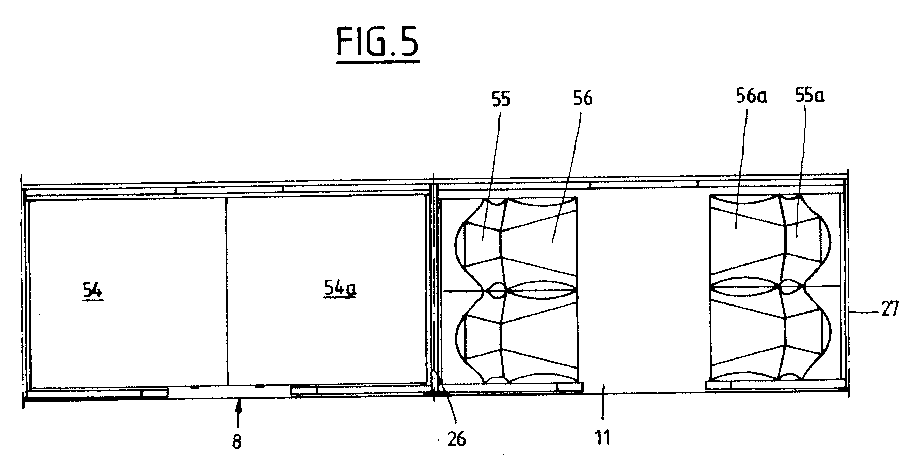

Fig. 5     eine Draufsicht auf zwei benachbarte Abteile.

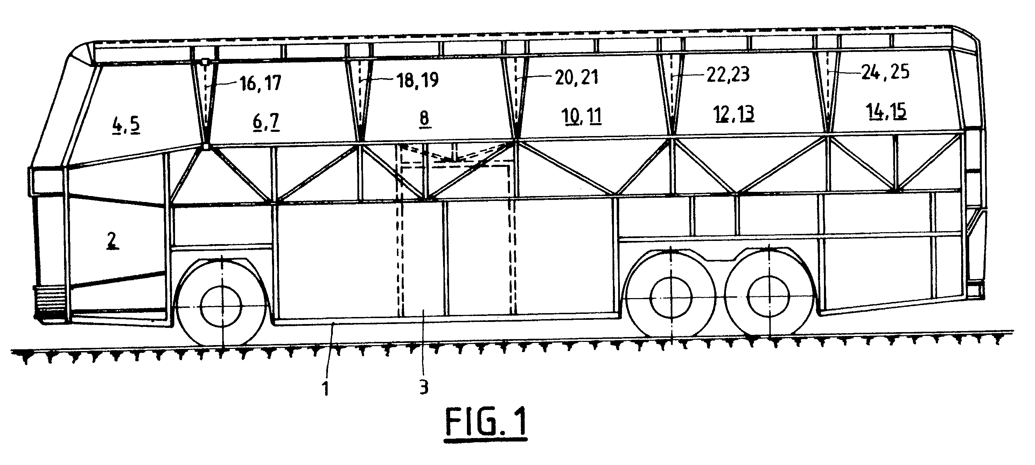

Figur 1 zeigt eine Gesamtdarstellung eines erfindungsgemäß ausgebildeten Omnibusses 1 mit einem Fahrerraum 2 und einem Eingang 3. Der Fahrgastraum ist unterteilt in gegenüberliegende Abteile 4,5 und 6,7 sowie das Einzelabteil 8 und weitere gegenüberliegende Abteile 10,11 und 12,13 sowie 14,15. Die diesen Abteilen zugeordneten Fenster sind durch die Holme 16,17; 18,19; 20,21; 22,23 und 24,25 voneinander getrennt. Im Bereich dieser Holme befinden sich auch die die einzelnen Abteile voneinander trennenden Querwände.

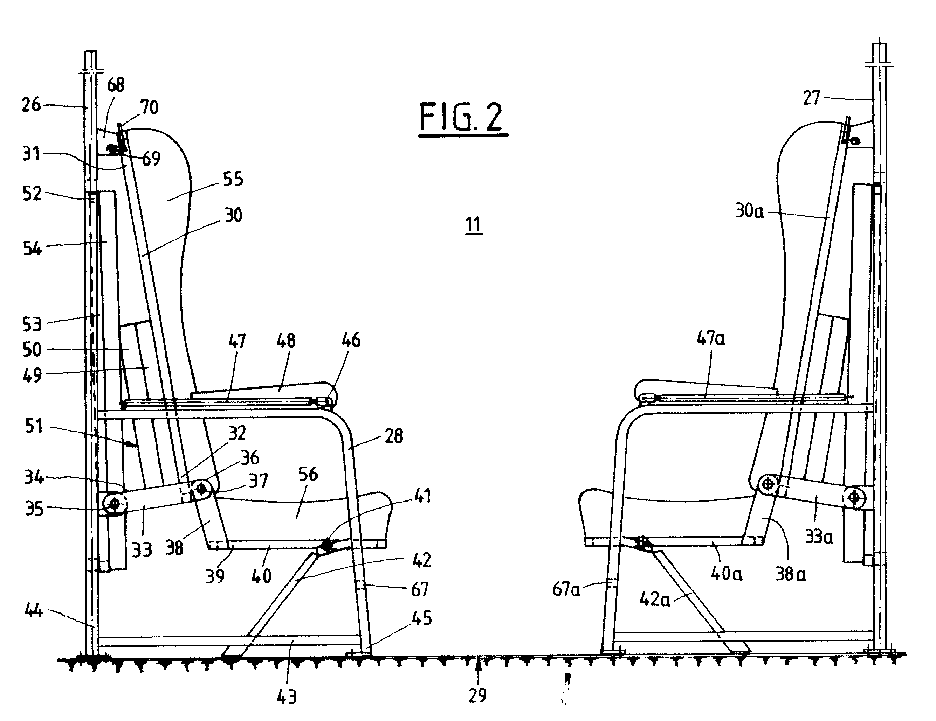

In Figur 2 ist das von Querwänden 26,27 begrenzte Abteil 11 dargestellt. Die Querwand 26 und Seitenrahmen 28 sind am Boden 29 des Omnibusses 1 befestigt. Ein Lehnenrahmen 30 ist an seinem oberen Ende 31 in nicht näher dargestellter Weise an der Querwand 26 gelagert.

Am unteren Ende 32 sind am Lehnenrahmen 30 zu beiden Seiten je eine Lasche 33 fest angebracht. Diese ist mit ihrem hinteren Ende 34 in einem Gelenk 35 an der Querwand 26 gelagert. An ihrem vorderen Ende 36 ist die Lasche 33 in einem Gelenk 37 mit einem Hebel 38 gelenkig gelagert. Dieser Hebel 38 ist am rückwärtigen Ende 39 eines Sitzrahmens 40 fest angebracht. Der Sitzrahmen 40 hat in seinem vorderen Bereich an beiden Seiten je eine Führungsrolle 41, die in einem Führungsprofil 42 geführt ist, das schräg rückwärts geneigt ist. Zur Erhöhung der Stabilität des gesamten Sitzes ist eine Verstärkungsstange 43 zwischen dem unteren Ende 44 der Querwand 26 und dem unteren Ende 45 des Seitenrahmens 28 vorgesehen.

In einem Lager 46 des Seitenrahmens 28 ist eine Armlehne 47 mit einem Polster 48 schwenkbeweglich angeordnet.

Auf der Rückseite des Lehnenrahmens 30 ist eine aus zwei Auflagenhälften 49,50 bestehende Liegeauflage 51 vorgesehen.

An der Querwand 26 ist in einem im einzelnen nicht dargestellten Scharnier 52 ein Bettrahmen 53 mit einer Liegeauflage 54 in Fahrtrichtung schwenkbeweglich angeordnet. Zwischen dem Bettrahmen 53 und dem Lehnenrahmen 30 sind die beiden Liegeauflagen 51 und 54 angeordnet. Auf der Vorderseite des Lehnenrahmens 30 ist die Rückenpolsterung 55 vorgesehen. Desgleichen ist auf der Oberseite des Sitzrahmens 40 ein Sitzpolster 56 angeordnet. Im unteren Bereich des Seitenrahmens 28 ist ein nach innen vom Seitenrahmen 28 abstehendes Auflager 67 vorgesehen.

Im Bereich des oberen Endes 31 des Lehnenrahmens 30 sind zu beiden Seiten des Lehnenrahmens 30 an der Querwand 26 Flacheisen 68 angeschweißt. An den Flacheisen 68 sind quer zur Fahrzeuglängsrichtung verlaufende Bolzen 69 angebracht. Am oberen Ende 31 des Lehnenrahmens 30 sind federbelastete Hebel 70 angeordnet, mit denen der Lehnenrahmen 30 an der Querwand 26 festgelegt und von dieser wieder gelöst werden kann.

Der in Figur 2 rechts dargestellte Sitz stimmt in allen Einzelheiten mit dem vorstehend beschriebenen in Figur 2 links dargestellten Sitz überein, so daß für den rechten Sitz die gleichen Bezugszeichen mit einem angefügten a verwendet sind.

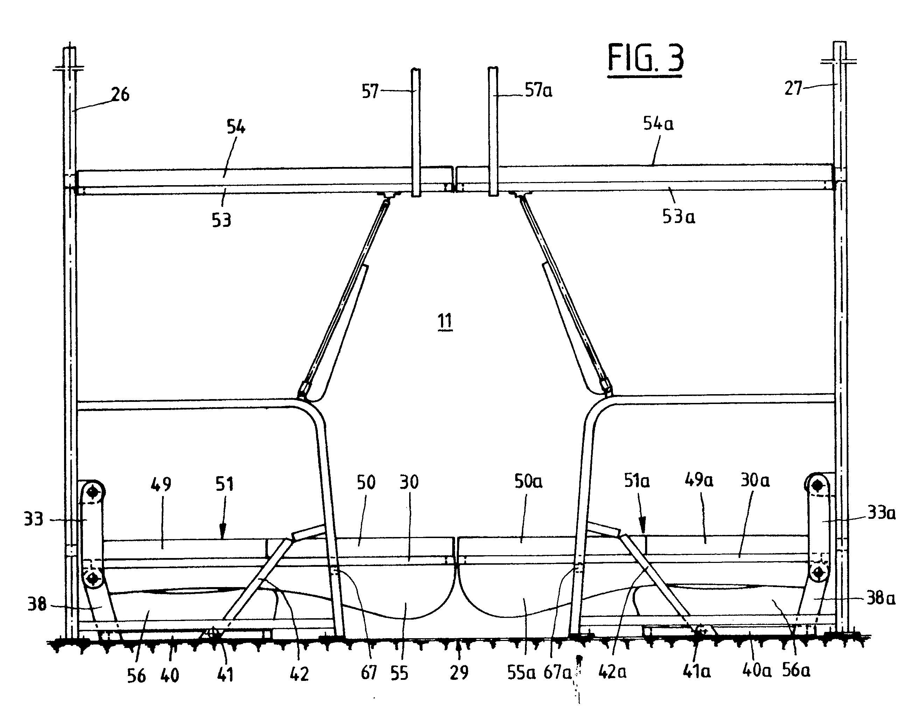

In Figur 3 ist das Abteil 11 mit den Sitzen in der Liegeposition dargestellt. Die beiden Lehnenrahmen 30 und 30a sind in die horizontale Lage geschwenkt und sind auf den Auflagern 67 und 67a arretiert. Hier bilden sie das untere Bett mit den Liegeauflagen 51 und 51a, die aus den aufgeklappten Auflagehälften 49,50 und 49a,50a bestehen. Die Sitzrahmen 40,40a sind bis auf den Boden 29 abgesenkt. Zwischen den Sitzrahmen 40,40a und den Lehnenrahmen 30,30a ist genügend Raum für die Sitzpolster 56,56a und die Rückenpolster 55,55a.

Die Führungsrollen 41,41a haben sich beim Herunterschwenken der Rückenlehnen 30,55 und 30a,55a auf den Führungen 42,42a von oben nach unten bewegt.

Die Bettrahmen 53,53a sind mit den Liegeauflagen 54,54a nach oben in eine horizontale Stellung geschwenkt und durch die Armlehnen 47,47a unterstützt. Zusätzlich zu dieser Unterstützung sind Gurte 57,57a vorgesehen, die am Dach des Fahrzeuges befestigt sind und die Bettrahmen 53,53a in ihrer horizontalen Lage halten.

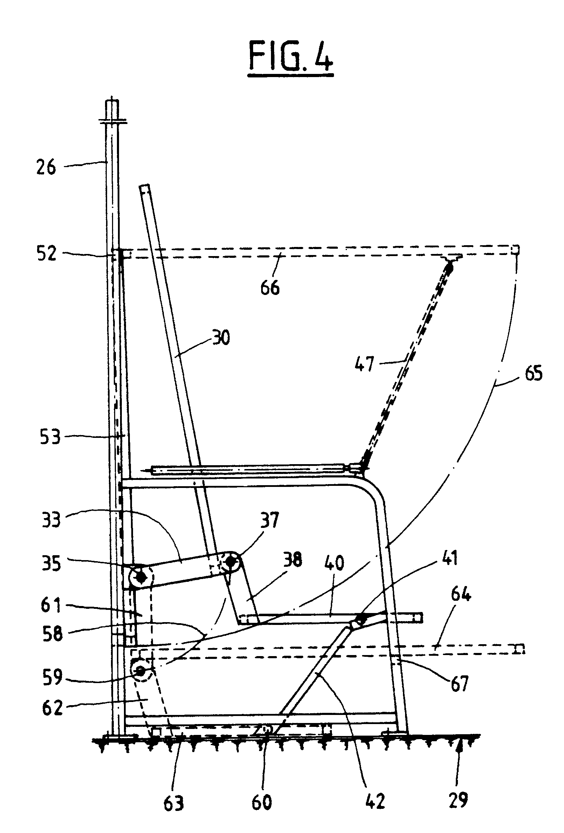

Aus Figur 4 geht die Kinematik des erfindungsgemäß ausgebildeten Sitzes hervor. Die ausgezogen gezeichnete Stellung des Sitzes ist die Sitzstellung, während die gestrichelt gezeichnete Stellung des Sitzes die Liegeposition des Sitzes darstellt. Wenn der Lehnenrahmen 30 aus der ausgezogen dargestellten Lage nach rechts geschwenkt wird, bewegt sich das Gelenk 37 auf dem Kreisbogen 58 nach unten in die Lage 59. Bei dieser Bewegung wandert die Führungsrolle 41 auf dem Führungsprofil 42 in die untere Lage 60. Gleichzeitig wird die Lasche 33 in die Lage 61 um das Gelenk 35 geschwenkt, während sich der Hebel 38 und der Sitzrahmen 40 in die untere Position 62 bzw. 63 bewegen. Nach beendetem Schwenkvorgang befindet sich der Lehnenrahmen 30 in seiner unteren Position 64 und stellt hier den Rahmen für das untere Bett dar.

Der Bettrahmen 53 wird um die Scharnierachse 52 auf dem Kreisbogen 65 in die horizontale Lage 66 geschwenkt und hier mittels der Armlehne 47 unterstützt.

**Patentansprüche**

1. Reisefahrzeug, insbesondere Reiseomnibus, mit einem Mittelgang durch den Fahrgastraum und mit zu beiden Seiten des Mittelganges vorgesehenen Doppelsitzen (55,56) mit Sitzbank und Rückenlehne, die aus einer Sitzposition in eine Ruhe- bzw. Liegeposition und umgekehrt zu bringen sind,
**dadurch gekennzeichnet,**
daß der Fahrgastraum zu beiden Seiten des Mittelganges durch Querwände (26,27) in mehrere Abteile (4 bis 15) mit je zwei einander gegenüber angeordneten Doppelsitzen (55,56) unterteilt ist, daß je Doppelsitz (55,56) ein Lehnenrahmen (30) für die Rückenlehne und ein Sitzrahmen (40) für die Sitzbank vorgesehen sind, wobei der Lehnenrahmen (30) über Laschen (33) mit der zugehörigen Querwand (26) und der Sitzrahmen (40) über Hebel (38) mit den Laschen (33) gelenkig verbunden ist, und daß an der Querwand (26) hinter dem Lehnenrahmen (30) ein Bettrahmen (53) für ein Oberbett in Fahrzeuglängsrichtung schwenkbeweglich angeordnet ist.

2. Reisefahrzeug nach Anspruch 1, dadurch gekennzeichnet, daß der Lehnenrahmen (30) an seinem unteren Ende (32) zu beiden Seiten mit je einer Lasche (33) und der Sitzrahmen (40) an seinem rückwärtigen Ende (39) zu beiden Seiten mit je einem Hebel (38) fest verbunden sind, wobei die Laschen (33) an ihren rückwärtigen Enden (34) in Gelenken (35) an der Querwand (26) gelagert und an ihren vorderen Enden (36) mit den Hebeln (38) gelenkig verbunden sind.

3. Reisefahrzeug nach Anspruch 1 oder 2, dadurch gekennzeichnet, daß an den Seitenwänden der Doppelsitze (55,56) schräg nach rückwärts verlaufende Führungsprofile (42) angebracht sind und daß im vorderen Bereich des Sitzrahmens (40) zu beiden Seiten außen je eine Führungsrolle (41) vorgesehen ist, die in den Führungsprofilen (42) geführt ist.

4. Reisefahrzeug nach einem der vorhergehenden Ansprüche, dadurch gekennzeichnet, daß je Seitenwand der Doppelsitze (55,56) ein Seitenrahmen (28) vorgesehen ist, in dessen unterem Bereich ein nach innen abstehendes Auflager (67) für die Lagerung des Lehnenrahmens (30) in der Liegeposition angebracht ist.

5. Reisefahrzeug nach einem der vorhergehenden Ansprüche, dadurch gekennzeichnet, daß auf der Rückseite des Lehnenrahmens (30) eine Liegeauflage (51) vorgesehen ist.

6. Reisefahrzeug nach einem der vorhergehenden Ansprüche, dadurch gekennzeichnet, daß an den Querwänden (26,27) Haltevorrichtungen für die Rückenlehnen in der Sitzposition vorgesehen sind.

7. Reisefahrzeug nach einem der vorhergehenden Ansprüche, dadurch gekennzeichnet, daß der Bettrahmen (53) mit seinem oberen Ende an der Querwand (26) in Fahrzeuglängsrichtung schwenkbeweglich angeordnet ist.

8. Reisefahrzeug nach einem der vorhergehenden Ansprüche, dadurch gekennzeichnet, daß auf der Oberseite des Bettrahmens (53) eine Liegeauflage (54) vorgesehen ist.

9. Reisefahrzeug nach einem der vorhergehenden Ansprüche, dadurch gekennzeichnet, daß zur Herstellung der Betten zunächst die Lehnenrahmen (30) beider einander gegenüber angeordneter Doppelsitze (55,56) nach unten und anschließend die einander gegenüberliegenden Bettrahmen (53,53a) nach oben in die horizontale Lage zu schwenken und jeweils in dieser Lage zu arretieren sind.

10. Reisefahrzeug nach einem der vorhergehenden Ansprüche, dadurch gekennzeichnet, daß die Bettrahmen (53,53a) durch hochgeschwenkte Armlehnen (47,47a) unterstützt und von am Dach des Fahrzeuges befestigten Gurten (57,57a) gehalten sind.

11. Reisefahrzeug nach einem der vorhergehenden Ansprüche, dadurch gekennzeichnet, daß beim Schwenken des Lehnenrahmens (30) nach vorn die am Sitzrahmen (40) vorgesehenen Führungsrollen (41) in dem schrägen Führungsprofil (42) geführt sind.

## Claims

1. A long-distance vehicle, in particular a long-distance bus, with a central gangway through the passenger compartment and, at both sides of the central gangway, double seats (55, 56) with a seat squab and a backrest, which are movable from a seating Position into a rest or lying position and vice-versa, characterised in that at both sides of the central gangway the passenger compartment is divided by transverse walls (26, 27) into a plurality of compartments (4 to 15) each having two mutually oppositely disposed double seats (55, 56), that for each double seat (55, 56) there is a back frame (30) for the backrest and a seat frame (40) for the seat squab, wherein the back frame (30) is pivotally connected by way of bars (33) to the associated transverse wall (26) and the seat frame (40) is pivotally connected by way of levers (38) to the bars (33), and that arranged pivotably in the longitudinal direction of the vehicle on the transverse wall (26) behind the back frame (30) is a bed frame (53) for an upper berth.

2. A long-distance vehicle according to claim 1 characterised in that at its lower end (32) the back frame (30) is fixedly connected at both sides to a respective bar (33) and at its rearward end (39) the seat frame (40) is fixedly connected at both sides to a respective lever (38), wherein at their rearward ends (34) the bars (33) are mounted in hinges (35) on the transverse wall (26) while at their forward ends (36) they are pivotally connected to the levers (38).

3. A long-distance vehicle according to claim 1 or claim 2 characterised in that inclinedly rearwardly extending guide profile members (42) are mounted to the side walls of the double seats (55, 56) and that provided in the front region of the seat frame (40) on the outside thereof on both sides is a respective guide roller (41) which is guided in the respective guide profile members (42).

4. A long-distance vehicle according to one of the preceding claims characterised in that provided for each side wall of the double seats (55, 56) is a side frame (28) in the lower region of which is mounted an inwardly projecting support (67) for mounting the back frame (30) in the lying position.

5. A long-distance vehicle according to one of the preceding claims characterised in that a padding means (51) for supporting a person in a lying position is provided on the back of the back frame (30).

6. A long-distance vehicle according to one of the preceding claims characterised in that holding means for holding the backrests in the sitting position are provided on the transverse walls (26, 27).

7. A long-distance vehicle according to one of the preceding claims claims characterised in that the bed frame (50) is arranged with its upper end on the transverse wall (26) pivotably in the longitudinal direction of the vehicle.

8. A long-distance vehicle according to one of the preceding claims characterised in that a padding means (54) for supporting a person in a lying position is provided on the top side of the bed frame (53).

9. A long-distance vehicle according to one of the preceding claims characterised in that for making the beds firstly the back frames (30) of two mutually oppositely disposed double seats (55, 56) are to be pivoted downwardly and then the mutually oppositely disposed bed frames (53, 53a) are to be pivoted upwardly into the horizontal position and they are each to be arrested in said position.

10. A long-distance vehicle according to one of the preceding claims characterised in that the bed frames (53, 53a) are supported by upwardly pivoted armrests (47, 47a) and are held by straps (57, 57a) secured to the roof of the vehicle.

11. A long-distance vehicle according to one of the preceding claims characterised in that, in the pivotal movement of the back frame (30) forwardly, the guide rollers (41) which are provided on the seat frame (40) are guided in the inclined guide profile member (42).

## Revendications

1. Véhicule de tourisme, en particulier autocar de tourisme, avec une allée centrale traversant l'espace destiné aux passagers et des doubles sièges (55, 56) disposés de part et d'autre de l'allée centrale avec assise et dossier qui peuvent passer de position assise en position couchée ou de repos et inversement, caractérisé en ce que l'espace destiné aux passagers de part et d'autre de l'allée centrale est divisé par des parois transversales (26, 27) en plusieurs compartiments (4 à 15) avec respectivement deux doubles sièges disposés face à face, que chaque double siège (55, 56) possède un cadre de dossier (30) pour le dossier et un cadre d'assise (40) pour l'assise, le cadre du dossier (30) étant articulé par des éclisses de fixation (33) avec la paroi transversale correspondante (26) et le cadre d'assise (40) étant articulé par des leviers (38) avec les éclisses de fixation (33) et
en ce qu'un cadre de lit (53) pour un lit supérieur est disposé contre la paroi transversale (26) derrière le cadre du dossier (30) dans le sens longitudinal du véhicule de manière à pouvoir pivoter.

2. Véhicule de tourisme selon la revendication 1 caractérisé en ce que le cadre du dossier (30) est fixé à demeure de part et d'autre de son extrémité inférieure (32) avec une éclisse de fixation (33) et le cadre de l'assise (40) de part et d'autre de son extrémité postérieure (39) avec un levier (38), les éclisses de fixation (33) étant logées par leurs extrémités postérieures (34) dans des joints articulés (35) sur la paroi transversale (26) et étant articulées par leurs extrémités antérieures (36) avec les leviers (38).

3. Véhicule de tourisme selon la revendication 1 ou 2 caractérisé en ce que des profils de guidage (42) inclinés vers l'arrière sont appliqués contre les parois latérales des doubles sièges (55, 56) et en ce qu'un galet de guidage (41) qui glisse dans le profil de guidage (42) est prévu à l'extérieur de part et d'autre de la région antérieure du cadre de l'assise (40).

4. Véhicule de tourisme selon une des revendications précédentes caractérisé en ce qu'un cadre latéral (28) est prévu contre chaque paroi latérale du double siège (55, 56) dans la région inférieure duquel un support s'étendant vers l'intérieur (67) est disposé pour le logement du cadre du dossier (30) en position couchée.

5. Véhicule de tourisme selon une des revendications précédentes caractérisé en ce qu'un support de couchette (51) est prévu sur la face postérieure du cadre du dossier (30).

6. Véhicule de tourisme selon une des revendications précédentes caractérisé en ce que des dispositifs de retenue sont prévus dans les parois transversales (26, 27) pour les dossiers en position assise.

7. Véhicule de tourisme selon une des revendications précédentes caractérisé en ce que le cadre de lit (53) est appliqué de manière à pouvoir pivoter par son extrémité supérieure contre la paroi transversale (26) dans le sens longitudinal du véhicule.

8. Véhicule de tourisme selon une des revendications précédentes caractérisé en ce qu'un support de couchette (54) est prévu sur la face supérieure du cadre de lit (53).

9. Véhicule de tourisme selon une des revendications précédentes caractérisé en ce que, pour la transformation en lit, les cadres du dossier (30) de deux doubles sièges (55, 56) disposés face à face doivent d'abord être pivotés vers le bas avant de faire pivoter les cadres de lit opposés (53, 53a) vers le haut jusqu'en position horizontale et de les bloquer respectivement dans cette position.

10. Véhicule de tourisme selon une des revendications précédentes caractérisé en ce que les cadres de lit (53, 53a) sont soutenus par des accoudoirs relevés à la verticale (47, 47a) et maintenus par des sangles (57, 57a) fixées au toit du véhicule.

11. Véhicule de tourisme selon une des revendications précédentes caractérisé en ce que, lors du pivotement du cadre du dossier vers l'avant, les galets de guidage (41) prévus sur le cadre d'assise (40) glissent dans le profil de guidage incliné (42).

## FIG. 1

EP 0 291 894 B1

## FIG. 2

11

EP 0 291 894 B1

FIG. 3

EP 0 291 894 B1

# FIG. 4

# FIG.5